# EUROPÄISCHE PATENTSCHRIFT

(11) **EP 1 786 075 B1**
(45) Veröffentlichungstag und Bekanntmachung des Hinweises auf die Patenterteilung: **03.12.2008**
(21) Anmeldenummer: 05024772.5
(22) Anmeldetag: 12.11.2005
(51) Int. Cl.: H01S 3/0975, H01S 3/0971, H05H 1/46

(54) **Verfahren zum Betrieb einer Vakuumplasmaprozessanlage**
Method for operating a vacuum-plasma processing apparatus
Méthode de fonctionnement d'un appareil de traitement au plasma sous vide

(43) Veröffentlichungstag der Anmeldung: 16.05.2007
(73) Patentinhaber: HÜTTINGER Elektronik GmbH + Co. KG, 79111 Freiburg (DE)
(72) Erfinder: Kirchmeier, Thomas, 79331 Teningen (DE); Glück, Michael, 79111 Freiburg (DE); Hofstetter, Christoph, 79331 Teningen (DE); Hintz, Gerd, Dr., 79292 Pfaffenweiler (DE)
(74) Vertreter: Kohler Schmid Möbus

(56) Entgegenhaltungen:
- EP-A- 0 315 696
- US-A- 5 434 881
- US-B1- 6 539 045

## Beschreibung

Die Erfindung betrifft ein Verfahren zum Betrieb einer Vakuumplasmaprozessanlage, bei dem in einem ersten Betriebszustand ein Hauptplasma und in einem zweiten Betriebszustand ein Hilfsplasma erzeugt wird.

Gas-Laser werden durch ein Plasma angeregt, das in so genannten Entladungskammern erzeugt wird. Das Plasma kann durch HF-Energie, z.B. bei 13MHz oder 27MHz, erzeugt werden.

Derzeit wird die gesamte für den Betrieb eines CO₂-Lasers notwendige HF-Leistung von einem einzigen HF-Leistungsgenerator erzeugt, in die Entladungskammer geführt, und dort auf die einzelnen Entladungsstrecken aufgeteilt. Dies ist beispielsweise in der US 6,539,045 beschrieben. Eine gleichmäßige Verteilung der HF-Leistung ist mit hohem Aufwand verbunden, und im Wesentlichen von mechanischen und geometrischen Bedingungen abhängig. Eine unterschiedliche Anregung einzelner Entladungstrecken ist nur mit aufwändigen Schaltern möglich.

CO₂ Laser werden häufig bei Frequenzen von 10Hz bis 200kHz gepulst betrieben. Außerdem muss der Laser, wenn er z.B. zum Schneiden von Blech eingesetzt wird, in sehr kurzen Abständen ein- und ausgeschaltet werden können. Sowohl beim Pulsen als auch bei jedem Einschalten muss das Plasma zur Erzeugung des Lasers erneut gezündet werden, was sehr hohe Spannungen erfordert und eine hohe Belastung für den HF-Leistungsgenerator darstellt. Das kommt auch daher, dass beim Zünden die Plasmalast eine sehr hohe Impedanz aufweist, die sich sehr rasch zu sehr niedrigen Werten entwickelt. Eine Lastanpassung wird man für den Betrieb mit voller Leistung auslegen, also für niedrige Impedanzen. Deswegen wird ein Großteil der Leistung von der Plasmalast beim Zündvorgang zurückreflektiert.

Um das Zünden zu erleichtern, wird in den Entladungskammern oftmals wie in der US 5,434,881 eine Zündhilfe vorgesehen, die im Wesentlichen durch ihren mechanischen Aufbau für eine Feldüberhöhung sorgt, und so schon bei niedrigen Leistungen eine örtlich begrenzte Plasmaentladung entstehen lässt. Diese örtlich begrenzte Plasmaentladung erzeugt genügend Elektronen und Ionen, dass sich das Plasma bei zusätzlicher Leistungszufuhr schnell in der gesamten Entladungskammer ausbreitet.
Solche Zündhilfen sorgen aber im Betrieb mit voller Leistung zu Inhomogenitäten, die unerwünscht sind und bei hohen Leistungen zu Überschlägen führen können.

Es sind auch Zündhilfen bekannt, bei denen ein einzelner zusätlicher Generator zum Zeitpunkt des Zündens an ein gesondertes Elektrodenpaar eine besonders hohe Spannung anlegt. Solche Zündhilfen sind aber mit erhöhtem Aufwand verbunden und benötigen zusätzliche Komponenten.

Das Dokument EP 0 315 696 veröffentlicht eine Vakuumplasmaprozessanlage mit einer Entladungskammer und mehreren HF-Leitungsgeneratoren mit zugeordneten Elektrodenpaaren zur Erzeugung eines Hauptplasmas.

Aufgabe der vorliegenden Erfindung ist es, eine verbesserte Zündhilfe für Vakuumplasmaprozesse bereitzustellen.

Die Erfindung wird in den unabhängigen und zugehörigen abhängigen Ansprüche definiert.

Diese Aufgabe wird erfindungsgemäß auf überraschende und einfache Art und Weise dadurch gelöst, dass das Hauptplasma erzeugt wird, indem durch eine erste Anzahl von HF-Leistungsgeneratoren eine Hauptplasmaleistung und durch eine zweite, geringere Anzahl der genannten HF-Leistungsgeneratoren eine Hilfsplasmaleistung erzeugt wird. Dadurch ist es möglich, das Hauptplasma mit einem vorgegebenen Leistungswert durch die von den HF-Leistungsgeneratoren erzeugte Leistung zu betreiben. Ist das Hauptplasma ausgeschaltet, bzw. beispielsweise in einer Pulspause erloschen, wird ein Teil der HF-Leistungsgeneratoren mit sehr niedriger Leistung betrieben, so dass gerade noch eine Plasmaentladung, nämlich das Hilfsplasma, aufrechterhalten wird, mit der die Plasmaleistung ohne Zuhilfenahme einer mechanischen Zündhilfe schnell wieder auf den vorgegebenen Wert des Hauptplasmas gebracht werden kann. Es sind somit keine separaten Elektroden notwendig, die allein der Aufrechterhaltung des Hilfsplasmas dienen. Die Elektroden, die für das Hilfsplasma verwendet werden, werden ebenso wie die dafür eingesetzten HF-Leistungsgeneratoren auch für das Hauptplasma verwendet.

Bei einer bevorzugten Verfahrensvariante kann vorgesehen sein, dass jedem HF-Leistungsgenerator eine Elektrode oder ein Elektrodenpaar zugeordnet wird und alle HF-Leistungsgeneratoren zur Erzeugung des Hauptplasmas eingesetzt werden. Bekannte HF-Leistungsgeneratoren für Schneid- und Schweißlaser arbeiten typischerweise bei 13 oder 27 MHz und haben Ausgangsleistungen von 10 bis 150 kW. Die meisten HF-Leistungsgeneratoren arbeiten bislang mit Verstärkerröhren, die diese hohe Leistung erzeugen können. Wenn jedoch mehrere HF-Leistungsgeneratoren verwendet werden, muss jeder einzelne HF-Leistungsgenerator für die gleiche Gesamtleistung weniger Leistung erzeugen. Dadurch wird es möglich, aus Halbleiterbauelementen aufgebaute HF-Leistungsgeneratoren zu verwenden. Vorteilhafterweise ist daher für jedes Elektrodenpaar ein HF-Leistungsgenerator vorgesehen.

Besonders bevorzugt ist es, wenn der Plasmazustand überwacht wird, insbesondere, ob ein Hilfsplasma oder kein Plasma vorhanden ist. Wenn der Plasmazustand bekannt ist, kann diese Information für den weiteren Betrieb der Vakuumplasmaanlage verwendet werden.

Insbesondere kann vorgesehen sein, dass zum Zünden des Hauptplasmas die Ansteuerung der HF-Leistungsgeneratoren in Abhängigkeit davon erfolgt, ob ein Hilfsplasma vorhanden ist oder nicht. Wenn erkannt wird, dass kein Hilfsplasma mehr vorhanden ist, können und müssen die HF-Leistungsgeneratoren zum so genannten "harten Zünden" angesteuert werden. Sie müssen dazu eine hohe Spannung liefern, da zunächst ein Plasma in der Entladungskammer erzeugt werden muss. Die hohe Spannung kann alternativ durch eine Veränderung der Lastanpassung zum "harten Zünden" oder eine Veränderung der Frequenz der HF-Leistung erzeugt werden. Wenn jedoch erkannt wird, dass noch ein Hilfsplasma in der Entladungskammer vorhanden ist, kann ein so genanntes "weiches Zünden" erfolgen. Insbesondere kann die Hauptplasmaleistung durch eine schnelle Leistungsregelung erreicht werden, ohne dass dabei ein Überschwingen der HF-Leistung über eine Soll-Leistung erfolgt.

Wenn eine HF-Leistung vorgegeben wird, unterhalb derer das Hilfsplasma erlischt, kann durch entsprechende Ansteuerung wenigstens der zweiten Anzahl von HF-Leistungsgeneratoren bewirkt werden, dass das Hilfsplasma nicht erlischt. Diese HF-Leistung ist stark davon abhängig, welcher Vakuumplasmaprozess betrieben werden soll. Wenn der Prozess und die für das Hilfsplasma dieses Prozesses benötigte HF-Leistung bekannt sind, kann die HF-Leistung beispielsweise manuell vorgegeben werden.

Alternativ ist es denkbar, dass die HF-Leistung erfasst und gespeichert wird, bei der das HF-Plasma erlischt. Wird beispielsweise ein neuer Vakuumplasmaprozess betrieben und ist nicht bekannt, bei welcher HF-Leistung das Hilfsplasma erlischt, so kann der Leistungswert gespeichert werden, bei dem im ersten Betrieb ein Löschen des Hilfsplasmas erfolgt. Wird dieser Wert gespeichert, so kann in Zukunft durch entsprechende Ansteuerung der HF-Leistungsgeneratoren vermieden werden, dass das Hilfsplasma erlischt.

Besonders bevorzugt ist es, wenn eine Leistungsregelung erfolgt. Dadurch kann der Plasmaprozess mit einer hohen Präzision ablaufen.

In den Rahmen der Erfindung fällt außerdem eine Vakuumplasmaprozessanlage, insbesondere Laseranlage oder Beschichtungsanlage, mit einer Entladungskammer und zumindest zwei HF-Leistungsgeneratoren zur Erzeugung eines Hauptplasmas in einem ersten Betriebszustand und eines Hilfsplasmas in einem zweiten Betriebszustand, wobei mehrere HF-Leistungsgeneratoren mit zugeordneten Elektroden oder Elektrodenpaaren vorgesehen sind und zur Erzeugung des Hauptplasmas eine erste Anzahl von HF-Leistungsgeneratoren betrieben ist und zur Erzeugung des Hilfsplasmas eine zweite, geringere Anzahl von HF-Leistungsgeneratoren betrieben ist. Mit einer derartigen Anordnung ist eine separate, insbesondere mechanische Zündhilfe nicht erforderlich. Die HF-Leistungsgeneratoren und die diesen zugeordneten Elektroden können sowohl zur Erzeugung eines Hauptplasmas als auch zur Erzeugung eines Hilfsplasmas verwendet werden, wobei ausgehend von einem Hilfsplasma das Zünden des Hauptplasmas einfacher und schneller erfolgen kann.

Besonders bevorzugt ist es, wenn jedem HF-Leistungsgenerator eine Elektrode oder ein Elektrodenpaar zugeordnet ist. Dadurch können Schaltungen eingespart werden, die HF-Leistung eines einzelnen HF-Leistungsgenerators auf mehrere Elektroden aufteilen müssen. Die Leistungseinspeisung in den Plasmaprozess über die einzelnen Elektroden kann dadurch genauer gesteuert und geregelt werden.

Bei einer besonders bevorzugten Ausführungsform kann vorgesehen sein, dass die HF-Leistungsgeneratoren parallel von einer gemeinsamen Steuerung angesteuert sind. Dadurch erhält ein Benutzer die größtmögliche Kontrolle über einen Vakuumplasmaprozess und kann dieser mit einer hohen Präzision ausgeführt werden, da schon auf geringfügige Änderungen gezielt reagiert werden kann.

Eine vorteilhafte Ausgestaltung der Erfindung zeichnet sich dadurch aus, dass ein insbesondere mit der zentralen Steuerung verbundenes Plasmaerfassungsmittel vorgesehen ist. Über das Plasmaerfassungsmittel kann beispielsweise erfasst werden, ob ein Hauptplasma, ein Hilfsplasma oder gar kein Plasma vorhanden ist. Insbesondere ist es wichtig zu erkennen, ob ein Hilfsplasma vorhanden ist. Ist ein solches vorhanden, kann das Hauptplasma durch Einsatz geringerer HF-Leistung und geringerer Spannungen einfach gezündet werden. Ist kein Plasma vorhanden, dauert der Zündvorgang länger und sind größere Leistungen und Spannungen erforderlich. Wenn also erkannt ist, dass kein Plasma vorhanden ist, kann ausreichend HF-Leistung zum Zünden des Hauptplasmas zur Verfügung gestellt werden.

Es sind verschiedene Ausführungsformen für das Plasmaerfassungsmittel denkbar. Besonders geeignet sind jedoch eine so genannte Langmuir Probe, ein kapazitiver Sensor, ein optischer Sensor oder ein thermischer Sensor als Plasmaerfassungsmittel. Derartige Sensoren können in oder an der Entladungskammer angeordnet sein.

Weiterhin ist es denkbar, dass das Plasmaerfassungsmittel als eine oder mehrere Messeinrichtungen elektrischer Größen und/oder Leistungsgrößen ausgebildet ist. Elektrische Größen, wie Strom und/oder Spannung, können beispielsweise am Ausgang des oder der HF-Leistungsgeneratoren oder an den Elektroden gemessen werden. Elektrische Größen können weiterhin in den Zuleitungen zu den Elektroden oder in gegebenenfalls vorgesehenen Anpassungsgliedern oder Koppelgliedern gemessen werden. Zudem ist es denkbar, die in den Plasmaprozess gelieferte Vorwärtsleistung oder die von dem Plasmaprozess reflektierte Leistung zu messen. Eine Möglichkeit besteht auch darin, die Oberwellen des Stroms und/oder der Spannung zu messen, beziehungsweise zu erfassen, und daraus auf den Plasmazustand zu schließen. Auch aus einer Messung der Phasendifferenz zwischen Strom und Spannung, beziehungsweise aus dem zeitlichen Verlauf einer Größe, wie beispielsweise der Spannung oder des Stroms, kann auf das Vorhandensein eines Hilfsplasmas geschlossen werden.

Die vom Plasmaprozess reflektierte Leistung kann minimiert werden, wenn die HF-Leistungsgeneratoren über Impedanzanpassungsglieder mit den Elektroden verbunden sind.

Besonders bevorzugt ist es, wenn eine Speichereinrichtung für einen Plasmaleistungswert, unterhalb dessen das Hilfsplasma erlischt, vorgesehen ist. Dadurch kann vermieden werden, dass dieser Wert immer wieder erneut eingegeben werden muss. Außerdem ist dadurch sichergestellt, dass für ein ausgeschaltetes Hauptplasma immer eine optimale Leistungseinstellung für das Hilfsplasma erfolgen kann.

Das Verfahren und die Vorrichtung eignen sich besonders für Laseranlagen, da sich hier ein Hilfsplasma nicht störend auswirkt. Das liegt vor allem daran, dass sich ein Laserstrahl erst ausbildet, wenn eine gewisse Mindestleistung im Vakuumplasmaprozess freigesetzt wird.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigt:
- **Fig. 1**: stark schematisiert eine Vakuumplasmaprozessanlage ohne Steuerung, aber mit einer Entladungskammer;
- **Fig. 2**: stark schematisiert eine Vakuumplasmaprozessanlage mit Steuerung, jedoch ohne Entladungskammer.

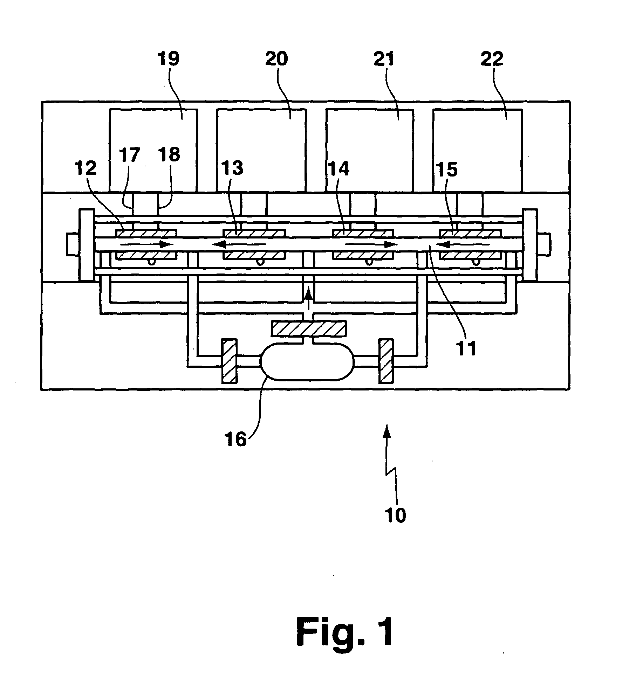

Die Fig. 1 zeigt eine Vakuumplasmaprozessanlage 10, die eine Entladungskammer 11 aufweist, an der vier Elektrodenpaare 12, 13, 14, 15 angeordnet sind. Bei der Vakuumplasmaprozessanlage 10 handelt es sich um einen Gas-Laser. Durch ein Pumpensystem 16 wird Gas in die Entladungskammer 11 gepumpt. Die Elektrodenpaare 12 - 15 sind über Zuleitungen 17, 18 mit dem HF-Leistungsgenerator 19 verbunden. Analog sind die Elektrodenpaare 13, 14, 15 mit den HF-Leistungsgeneratoren 20, 21, 22 verbunden. Zur Erzeugung eines Hauptplasmas in der Entladungskammer 11 werden die HF-Leistungsgeneratoren 19 - 22 in der Regel so angesteuert, dass sie eine möglichst große HF-Leistung über die zugeordneten Elektroden beziehungsweise Elektrodenpaare 12 - 15 in die Entladungskammer 11 beziehungsweise den Plasmaprozess, der in der Entladungskammer 11 stattfindet, einkoppeln.

Zum Zünden eines Hauptplasmas ist eine große HF-Leistung notwendig. Außerdem sind große Spannungen notwendig. Wird das Hauptplasma nicht benötigt, beispielsweise weil der Laser vorübergehend nicht benötigt wird oder in Pulspausen, wenn der Laser gepulst betrieben wird, wird die Leistungszufuhr durch einige der HF-Leistungsgeneratoren 19 - 22, beispielsweise der HF-Leistungsgeneratoren 19 - 21, unterbrochen, beispielsweise indem die HF-Leistungsgeneratoren 19 - 21 abgeschaltet werden. In diesem Fall kann durch den HF-Leistungsgenerator 22 noch eine ausreichend große HF-Leistung über das zugeordnet Elektrodenpaar 15 eingespeist werden, dass ein Hilfsplasma im Bereich des Elektrodenpaars 15 in der Entladungskammer 11 bestehen bleibt.

Wird anschließend wieder ein Hauptplasma benötigt, müssen nur die HF-Leistungsgeneratoren 19 - 21 zugeschaltet werden, wobei das Zünden des Hauptplasmas bei bestehendem Hilfsplasma bei relativ geringen eingespeisten HF-Leistungen und Spannungen erfolgt.

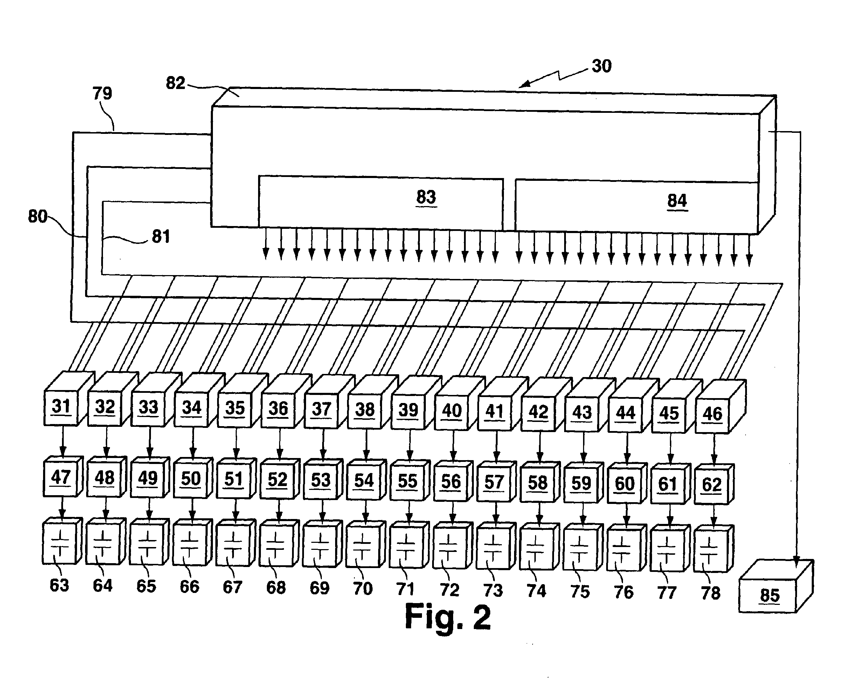

In der Fig. 2 ist eine Vakuumplasmaprozessanlage 30 dargestellt. Diese umfasst sechzehn HF-Leistungsgeneratoren 31 - 46, die jeweils über ein Impedanz Anpassungsglied 47 - 62 mit einem Elektrodenpaar 63 - 78 verbunden sind. Alle HF-Leistungsgeneratoren 31 - 46 sind über analoge Signalleitungen 79, eine Schnittstelle 80 und eine Fehlermeldungsleitung 81 mit einer zentralen Steuerung 82 verbunden. Weiterhin weist die zentrale Steuerung 82 sechzehn synchrone Pulsausgänge 83 und sechzehn synchrone Taktausgänge 84 auf, die ebenfalls zu den HF-Leistungsgeneratoren 31 - 46 führen. Dadurch, dass die HF-Leistungsgeneratoren 31 - 46 durch eine zentrale Steuerung 82 angesteuert werden, bestehen vielfältige Beeinflussungsmöglichkeiten des Vakuumplasmaprozesses. Außerdem besteht die Möglichkeit, alle oder auch nur einige der HF-Leistungsgeneratoren 31 - 46 anzusteuern. Zur Speisung eines Hauptplasmas werden vorzugsweise alle HF-Leistungsgeneratoren 31 - 46 verwendet. Es ist jedoch auch denkbar, je nach Vakuumplasmaprozess, nicht alle HF-Leistungsgeneratoren 31 - 46 zur Speisung eines Hauptplasmas zu verwenden. Für jeden Vakuumplasmaprozess gilt jedoch, dass die Anzahl der HF-Leistungsgeneratoren 31 - 46, die zur Speisung des Hauptplasmas verwendet wird, größer ist als die Anzahl der HF-Leistungsgeneratoren 31 - 46, die zur Speisung des Hilfsplasmas verwendet wird. Vorzugsweise wird nur ein HF-Leistungsgenerator 31 - 46 zur Speisung des Hilfsplasmas verwendet.

In dem Fall, in dem durch die HF-Leistungsgeneratoren 31 - 46 kein Hauptplasma erzeugt werden soll, soll in der Entladungskammer ein Hilfsplasma ausgebildet werden.

Zur Kontrolle, dass tatsächlich ein Hilfsplasma in der Entladungskammer besteht, ist ein Plasmaerfassungsmittel 85, vorgesehen, das mit der Steuerung 82 in Datenaustauschverbindung steht. Durch das Plasmaerfassungsmittel aufgenommene Messwerte können unmittelbar in dem Plasmaerfassungsmittel ausgewertet werden oder die Auswertung kann in der zentralen Steuerung 82 erfolgen. Aufgrund der von dem Plasmaerfassungsmittel 85 gelieferten Informationen kann die zentrale Steuerung 82 zum einen die Leistungszufuhr der HF-Leistungsgeneratoren steuern, die für die Aufrechterhaltung des Hilfsplasmas verantwortlich sind.

Zum anderen kann die zentrale Steuerung 82 die HF-Leistungsgeneratoren 31 - 46 unterschiedlich zum Zünden eines Hauptplasmas ansteuern, je nachdem, ob durch das Plasmaerfassungsmittel 85 ein Hilfsplasma in der Entladungskammer oder kein Plasma signalisiert wird.

## Patentansprüche

1. Verfahren zum Betrieb einer Vakuumplasmaprozessanlage (10, 30), bei dem in einem ersten Betriebszustand ein Hauptplasma erzeugt wird, indem durch eine erste Anzahl von HF-Leistungsgeneratoren (19 - 22, 31 - 46) eine Hauptplasmaleistung erzeugt wird, **dadurch gekennzeichnet, dass** in einem zweiten Betriebszustand ein Hilfsplasma erzeugt wird, indem durch eine zweite, geringere Anzahl der genannten HF-Leistungsgeneratoren (19 - 22, 31 - 46) eine Hilfsplasmaleistung erzeugt wird.

2. Verfahren nach Anspruch 1, **dadurch gekennzeichnet, dass** jedem HF-Leistungsgenerator (19 - 22, 31 - 46) eine Elektrode oder ein Elektrodenpaar (12 - 15, 63 - 78) zugeordnet wird und alle HF-Leistungsgeneratoren (19 - 22, 31 - 46) zur Erzeugung des Hauptplasmas eingesetzt werden.

3. Verfahren nach einem der vorhergehenden Ansprüche, **dadurch gekennzeichnet, dass** der Plasmazustand überwacht wird.

4. Verfahren nach Anspruch 3, **dadurch gekennzeichnet, dass** überwacht wird, ob ein Hilfsplasma oder kein Plasma vorhanden ist.

5. Verfahren nach einem der vorhergehenden Ansprüche, **dadurch gekennzeichnet, dass** zum Zünden des Hauptplasmas die Ansteuerung der HF-Leistungsgeneratoren (19 - 22, 31 - 46) in Abhängigkeit davon erfolgt, ob ein Hilfsplasma vorhanden ist oder nicht.

6. Verfahren nach einem der vorhergehenden Ansprüche, **dadurch gekennzeichnet, dass** eine HF-Leistung vorgegeben wird, unterhalb derer das Hilfsplasma erlischt.

7. Verfahren nach einem der vorhergehenden Ansprüche, **dadurch gekennzeichnet, dass** die HF-Leistung erfasst und gespeichert wird, bei der das HF-Plasma erlischt.

8. Verfahren nach einem der vorhergehenden Ansprüche, **dadurch gekennzeichnet, dass** eine Leistungsregelung erfolgt.

9. Vakuumplasmaprozessanlage (10, 30), mit einer Entladungskammer (11) und zumindest zwei HF-Leistungsgeneratoren, (19 - 22, 31 - 46) zur Erzeugung eines Hauptplasmas in einem ersten Betriebszustand, wobei mehrere HF-Leistungsgeneratoren (19 - 22, 31 - 46) mit zugeordneten Elektroden oder Elektrodenpaaren (12 - 15, 63 - 78) vorgesehen sind und zur Erzeugung des Hauptplasmas eine erste Anzahl von HF-Leistungsgeneratoren (19 - 22, 31 - 46) betreibbar ist, **dadurch gekennzeichnet, dass** zur Erzeugung eines Hilfsplasmas in einem zweiten Betriebszustand eine zweite, geringere Anzahl von HF-Leistungsgeneratoren (19 - 22, 31 - 46) betreibbar ist.

10. Vakuumplasmaprozessanlage nach einem der vorhergehenden Ansprüche, **dadurch gekennzeichnet, dass** jedem HF-Leistungsgenerator (19 - 22, 31 - 46) eine Elektrode oder ein Elektrodenpaar (12 - 15, 63 - 78) zugeordnet ist.

11. Vakuumplasmaprozessanlage nach einem der vorhergehenden Ansprüche, **dadurch gekennzeichnet, dass** die HF-Leistungsgeneratoren (19 - 22, 31 - 46) von einer gemeinsamen Steuerung (82) angesteuert sind.

12. Vakuumplasmaprozessanlage nach Anspruch 11, **dadurch gekennzeichnet, dass** die HF-Leistungsgeneratoren (19 - 22, 31 - 46) parallel von einer gemeinsamen Steuerung (82) angesteuert sind.

13. Vakuumplasmaprozessanlage nach einem der vorhergehenden Ansprüche, **dadurch gekennzeichnet, dass** ein Plasmaerfassungsmittel (85) vorgesehen ist.

14. Vakuumplasmaprozessanlage nach Anspruch 13, **dadurch gekennzeichnet, dass** das Plasmaerfassungsmittel (85) mit der zentralen Steuerung (82) verbunden ist.

15. Vakuumplasmaanlage nach einem der vorhergehenden Ansprüche, **dadurch gekennzeichnet, dass** eine Speichereinrichtung für einen Plasmaleistungswert, unterhalb dessen das Hilfsplasma erlischt, vorgesehen ist.

## Claims

1. Method for operating a vacuum plasma process system (10, 30), wherein a main plasma is generated in a first operating state in that a main plasma power is generated by a first number of RF power generators (19 to 22, 31 to 46), **characterized in that** an auxiliary plasma is generated in a second operating state by generating an auxiliary plasma power by a second, smaller number of said RF power generators (19 to 22, 31 to 46).

2. Method according to claim 1, **characterized in that** each RF power generator (19 to 22, 31 to 46) is associated with an electrode or an electrode pair (12 to 15, 63 to 78), wherein all RF power generators (19 to 22, 31 to 46) are used to generate the main plasma.

3. Method according to any one of the preceding claims, **characterized in that** the plasma state is monitored.

4. Method according to claim 3, **characterized in that** it is monitored whether an auxiliary plasma or no plasma is present.

5. Method according to any one of the preceding claims, **characterized in that** for igniting the main plasma, the RF power generators (19 to 22, 31 to 46) are driven based on whether or not an auxiliary plasma is present.

6. Method according to any one of the preceding claims, **characterized in that** an RF power is predetermined, below which the auxiliary plasma extinguishes.

7. Method according to any one of the preceding claims, **characterized in that** the RF power, at which the RF plasma extinguishes, is detected and stored.

8. Method according to any one of the preceding claims, **characterized in that** the power is closed-loop controlled.

9. Vacuum plasma process system (10, 30), comprising a discharge chamber (11) and at least two RF power generators (19 to 22, 31 to 46) for generating a main plasma in a first operating state, wherein several RF power generators (19 to 22, 31 to 46) are provided having associated electrodes or electrode pairs (12 to 15, 63 to 78), and a first number of RF power generators (19 to 22, 31 to 46) are operatable for generating the main plasma, **characterized in that** a second, smaller number of RF power generators (19 to 22, 31 to 46) are operatable to generate an auxiliary plasma in a second operating state.

10. Vacuum plasma process system according to any one of the preceding claims, **characterized in that** each RF power generator (19 to 22, 31 to 46) is associated with an electrode or an electrode pair (12 to 15, 63 to 78).

11. Vacuum plasma process system according to any one of the preceding claims, **characterized in that** the RF power generators (19 to 22, 31 to 46) are driven by a common control (82).

12. Vacuum plasma process system according to claim 11, **characterized in that** the RF power generators (19 to 22, 31 to 46) are driven in parallel by a common control (82).

13. Vacuum plasma process system according to any one of the preceding claims, **characterized in that** a plasma detecting means (85) is provided.

14. Vacuum plasma process system according to claim 13, **characterized in that** the plasma detecting means (85) is connected to the central control (82).

15. Vacuum plasma process system according to any one of the preceding claims, **characterized in that** a storage means is provided for storing a plasma power value, below which the auxiliary plasma extinguishes.

## Revendications

1. Procédé de fonctionnement d'une installation de traitement au plasma sous vide (10, 30), selon lequel, dans un premier état de fonctionnement, un plasma principal est généré par le fait qu'une puissance de plasma principal est générée par un premier nombre de générateurs de puissance HF (19 - 22, 31 - 46), **caractérisé en ce que**, dans un deuxième état de fonctionnement, un plasma auxiliaire est généré par le fait qu'une puissance de plasma auxiliaire est générée par un deuxième nombre, plus faible, desdits générateurs de puissance HF (19 - 22, 31 - 46).

2. Procédé selon la revendication 1, **caractérisé en ce qu'**à chaque générateur de puissance HF (19 - 22, 31 - 46) est associée une électrode ou une paire d'électrodes (12 - 15, 63 - 78) et que tous les générateurs de puissance HF (19 - 22, 31 - 46) sont utilisés pour générer le plasma principal.

3. Procédé selon l'une des revendications précédentes, **caractérisé en ce que** l'état du plasma est surveillé.

4. Procédé selon la revendication 3, **caractérisé en ce qu'**il est surveillé si un plasma auxiliaire ou aucun plasma n'est présent.

5. Procédé selon l'une des revendications précédentes, **caractérisé en ce que** pour l'allumage du plasma principal, les générateurs de puissance HF (19 - 22, 31 - 46) sont commandés en fonction de la présence ou non d'un plasma auxiliaire.

6. Procédé selon l'une des revendications précédentes, **caractérisé en ce qu'**il est prescrit une puissance HF au-dessous de laquelle le plasma auxiliaire s'éteint.

7. Procédé selon l'une des revendications précédentes, **caractérisé en ce que** la puissance HF à laquelle le plasma HF s'éteint est détectée et mémorisée.

8. Procédé selon l'une des revendications précédentes, **caractérisé en ce qu'**une régulation de puissance est effectuée.

9. Installation de traitement au plasma sous vide (10, 30) avec une chambre de décharge (11) et au moins deux générateurs de puissance HF (19 - 22, 31 - 46) pour générer un plasma principal dans un premier état de fonctionnement, plusieurs générateurs de puissance HF (19 - 22, 31 - 46) avec des électrodes ou des paires d'électrodes (12 - 15, 63 - 78) associées étant prévus et un premier nombre de générateurs de puissance HF (19 - 22, 31 - 46) pouvant fonctionner pour générer le plasma principal, **caractérisée en ce qu'**un deuxième nombre, plus faible, de générateurs de puissance HF (19 - 22, 31 - 46) peut fonctionner pour générer un plasma auxiliaire dans un deuxième état de fonctionnement.

10. Installation de traitement au plasma sous vide selon l'une des revendications précédentes, **caractérisée en ce qu'**à chaque générateur de puissance HF (19 - 22, 31 - 46) est associée une électrode ou une paire d'électrodes (12 - 15, 63 - 78).

11. Installation de traitement au plasma sous vide selon l'une des revendications précédentes, **caractérisée en ce que** les générateurs de puissance HF (19 - 22, 31 - 46) sont commandés par une commande commune (82).

12. Installation de traitement au plasma sous vide selon la revendication 11, **caractérisée en ce que** les générateurs de puissance HF (19 - 22, 31 - 46) sont commandés en parallèle par une commande commune (82).

13. Installation de traitement au plasma sous vide selon l'une des revendications précédentes, **caractérisée en ce qu'**un moyen de détection de plasma (85) est prévu.

14. Installation de traitement au plasma sous vide selon la revendication 13, **caractérisée en ce que** le moyen de détection de plasma (85) est relié à la commande centrale (82).

15. Installation de traitement au plasma sous vide selon l'une des revendications précédentes, **caractérisée en ce qu'**il est prévu un dispositif de mémorisation pour une valeur de puissance de plasma au-dessous de laquelle le plasma auxiliaire s'éteint.
